(19) Europäisches Patentamt
European Patent Office
Office européen des brevets

(11) Veröffentlichungsnummer: **0 265 374 B1**

(12) **EUROPÄISCHE PATENTSCHRIFT**

(45) Veröffentlichungstag der Patentschrift: **19.12.90**

(51) Int. Cl.[5]: **C08F 226/06,** C08F 222/40, C09D 201/02, C09J 201/02

(21) Anmeldenummer: **87810526.1**

(22) Anmeldetag: **14.09.87**

(54) **Di- oder Polycyanatverbindungen und substituierte Bicyclo[2.2.1]hept-5-en-2,3-dicarbonsäureimide enthaltende Gemische und deren Verwendung.**

(30) Priorität: **19.09.86 CH 3754/86**

(43) Veröffentlichungstag der Anmeldung: **27.04.88 Patentblatt 88/17**

(45) Bekanntmachung des Hinweises auf die Patenterteilung: **19.12.90 Patentblatt 90/51**

(84) Benannte Vertragsstaaten: **BE CH DE FR GB IT LI NL**

(56) Entgegenhaltungen:
**EP-A- 0 105 024**
**EP-A- 0 175 648**
**DE-A- 3 026 017**

(73) Patentinhaber: **CIBA-GEIGY AG, Klybeckstrasse 141, CH-4002 Basel(CH)**

(72) Erfinder: **Kramer, Andreas, Dr., Bundtels, CH-3186 Düdingen(CH)**

EP 0 265 374 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft heisshärtbare Gemische, enthaltend Di- oder Polycyanatverbindungen und substituierte Bicyclo[2.2.1]hept-5-en-2,3-dicarbonsäureimide, deren Verwendung und die aus den Gemischen durch Härtung erhaltenen Formstoffe.

In der DE-OS 30 26 017 werden Gemische aus Polycyanatverbindungen und Polymaleinimiden offenbart, die sich katalytisch härten lassen.

Aus der EP-Patentanmeldung 0 175 648 sind heisshärtbare Stoffgemische aus substituierten Bicyclo[2.2.1]hept-5-en-2,3-dicarbonsäureimiden und Polymaleinimiden bekannt.

Diese vorbekannten Gemische sind in organischen Lösungsmitteln nur mässig löslich, und die durch Aufschmelzen dieser Gemische hergestellten Mischungen entmischen sich beim Abkühlen auf Raumtemperatur wieder.

Es wurde gefunden, dass Gemische aus Di- oder Polycyanatverbindungen und substituierten Bicyclo[2.2.1]hept-5-en-2,3-dicarbonsäureimiden eine bessere Verarbeitbarkeit aufweisen, insbesondere zum Schmelzimprägnieren gut geeignet sind, auch in organischen Lösungsmitteln besser löslich sind und die in der Schmelze hergestellten Mischungen bei Raumtemperatur stabil sind, d.h., sich nicht wieder entmischen.

Gegenstand vorliegender Erfindung sind somit heisshärtbare Gemische, enthaltend
(a) 5 bis 95 Gew.-% mindestens einer aromatischen Di- oder Polycyanatverbindung oder eines Präpolymeren davon,
(b) 95 bis 5 Gew.-% mindestens einer Verbindung der Formel I oder II

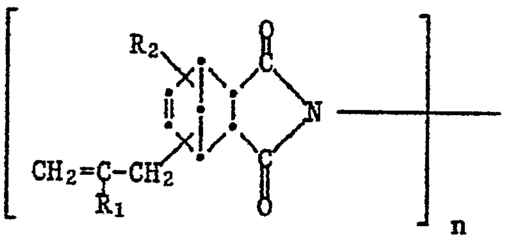

(I)

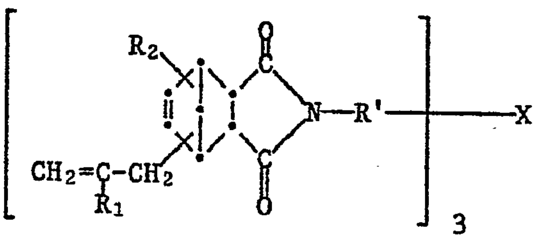

(II)

oder eines Präpolymeren einer Verbindung der Formel I oder II und, bezogen auf die Summe von (a) und (b),
(c) 0 bis 50 Gew.-% mindestens einer Verbindung der Formel III

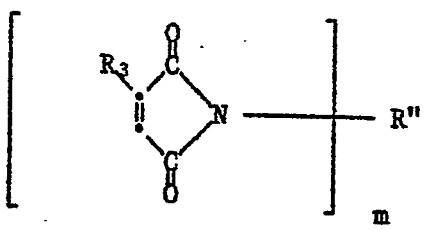

(III),

worin
$R_1$, $R_2$ und $R_3$ unabhängig voneinander je ein Wasserstoffatom oder Methyl bedeuten,
n 1 oder 2 und m 2 oder 3 bedeuten,
R, falls n 1 bedeutet, ein Wasserstoffatom, Alkyl mit 1-12 C-Atomen, Alkenyl mit 3-6 C-Atomen, Cycloalkyl mit 5-8 C-Atomen, Aryl mit 6-10 C-Atomen oder Benzyl, oder, falls n 2 bedeutet, $-C_pH_{2p}-$ mit p = 2-20, Arylen mit 6-10 C-Atomen oder eine Gruppe der Formel IV

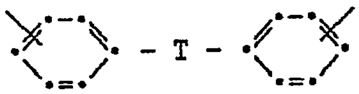

(IV)

mit T = Methylen, Isopropyliden, CO, O, S oder $SO_2$ bedeutet,
X für

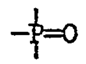 oder 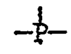

steht und R' $-C_qH_{2q}-$ mit q = 2-20, $-C_rH_{2r}-O-$mit r = 2-6, meta- oder para-Phenylen, meta- oder para-Phenylenoxy bedeutet, wobei das Sauerstoffatom an die Gruppe X gebunden ist, und

R" einen m-wertigen organischen Rest mit 2-30 C-Atomen darstellt.

Vorzugsweise enthalten die erfindungsgemässen Gemische die Komponente (a) in einer Menge von 20 bis 80 Gew.-%, die Komponente (b) in einer Menge von 80 bis 20 Gew.-% und die Komponente (c), bezogen auf die Summe von (a) und (b), in einer Menge von 0 bis 30 Gew.-%.

Insbesondere enthalten die erfindungsgemässen Gemische die Komponente (a) in einer Menge von 20 bis 60 Gew.-% und die Komponente (b) in einer Menge von 40 bis 80 Gew.-%.

Die in den erfindungsgemässen Gemischen als Komponente (a) enthaltenen aromatischen Di- oder Polycyanatverbindungen sind bekannt und zum Teil im Handel erhältlich. Beispielsweise können als Di- und Polycyanatverbindungen solche der Formel V

$$R'''-(-OCN)_y \qquad (V)$$

verwendet werden, worin R''' ein einen oder mehrere aromatische Kerne enthaltender Rest ist, der sich von zwei- oder mehrwertigen, ein- oder mehrkernigen, unsubstituierten oder substituierten Phenolen durch Entfernen der OH-Gruppen ableitet, wobei jede Cyanatgruppe direckt an einen aromatischen Kern gebunden ist, und y eine Zahl von 2 bis 10 bedeutet. Geeignete Substituenten sind dabei beispielsweise Alkyle, Alkoxy, Alkenyle, Halogenatome, vorzugsweise Chlor- oder Bromatome, und Nitrogruppen.

Als Beispiele von geeigneten Di- oder Polycyanatverbindungen seien genannt:
Dicyanatobenzol, 1,3,5-Tricyanatobenzol, 1,3-, 1,4-, 1,6-, 1,8-, 2,6- oder 2,7-Dicyanatonaphthalin, 1,3,6-Tricyanatonaphthalin, 4,4'-Dicyanatobiphenyl, Bis(4-cyanatophenyl)methan, 2,2-Bis (4-cyanatophenyl)propan, 2,2-Bis(3,5-dichlor-4-cyanatophenyl)propan, 2,2-Bis(3,5-dibrom-4-dicyanatophenyl)propan, Bis(4-cyanatophenyl)äther, Bis(4-cyanatophenyl)thioäther, Bis(4-cyanatophenyl)sulfon, Tris(4-cyanatophenyl)phosphit, Tris(4-cyanatophenyl)phosphat, Bis(3-chlor-4-cyanatophenyl)methan und cyanatisierte Novolake.

Die Di- und Polycyanatverbindungen der Formel V können beispielsweise nach dem in der DE-OS 25 29 486 offenbarten Verfahren hergestellt werden, indem man Di- oder Poly(trialkylammonium)phenolate der zwei- oder mehrwertigen Phenole in Gegenwart von Trialkylaminen mit Halogencyan, vorzugsweise Chlor- oder Bromcyan, umsetzt. Solche Phenolate können sich beispielsweise von den folgenden Phenolen der Formeln VI bis VIII

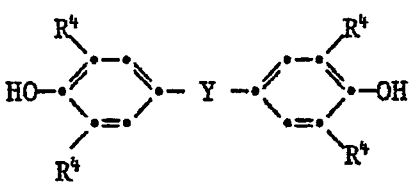

(VI),

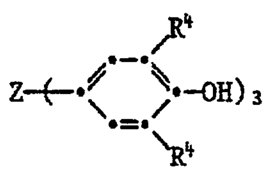

(VII)

und

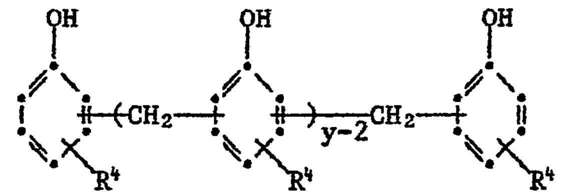

(VIII)

ableiten, worin

$R^4$ je für ein Wasserstoff-, Halogenatom, Alkyl mit 1 bis 9 C-Atomen, Alkenyl mit bis zu 4 C-Atomen, Alkoxy mit 1 bis 4 C-Atomen, Y für eine einfache Bindung, Alkylen mit bis zu 5 C-Atomen, Cycloalkylen, vorzugsweise Cyclohexylen, $-SO_2-$, -SO-, -S-, -CO-, -OCO-O-, -O- oder $-CH_2OCH_2-$ steht,

Z für

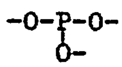 oder 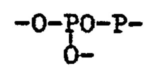

steht und

y eine Zahl von 2 bis 10 bedeutet.

Die in den erfindungsgemässen Gemischen als Komponente (a) enthaltenen Präpolymeren von Di- oder Polycyanatverbindungen werden durch Polymerisation der genannten Cyanatverbindungen in Gegenwart einer Säure, wie Mineral- oder Lewissäure, einer Base, wie Natriumhydroxid, eines Natriumalkoholates, eines tertiären Amins oder eines Salzes, wie Natriumcarbonat oder Lithiumchlorid, als Katalysator erhalten und weisen bevorzugt ein durchschnittliches Molekulargewicht von mindestens 400 und höchstens 6000 auf.

Die erfindungsgemässen Gemische können als Komponente (a) auch Mischungen von Di- oder Polycyanatverbindungen mit den entsprechenden Präpolymeren enthalten. Beispielsweise enthalten viele der handelsüblich erhältlichen Dicyanatverbindungen, die sich von Bisphenolen und Halogencyan ableiten, zum Teil die entsprechenden Präpolymeren.

Vorzugsweise enthalten die erfindungemässen Gemische als Komponente (a) eine Dicyanatverbindung oder deren Mischung mit dem entsprechenden Präpolymer.

In den Verbindungen der Formel I kann R eine gerad- oder verzweigtkettige Alkylgruppe mit 1-12 C-Atomen bedeuten, wie Methyl, Aethyl, Isopropyl, n-Butyl, Isopenyl, n-Hexyl, 2-Aethyl-hexyl, n-Decyl und n-Dodecyl, vorzugsweise Alkyl mit 1-8 C-Atomen. R in der Bedeutung einer Alkenylgruppe mit 3-6 C-Atomen kann ebenfalls geradkettig oder verzweigt sein, wie Allyl, Methallyl, 2-Butenyl und 3-Hexenyl, vorzugsweise Allyl.

Wenn R eine Cycloalkylgruppe bedeutet, kann es sich um eine Cyclopentyl-, Cyclohexyl, Cycloheptyl- oder Cyclooctylgruppe handeln, vorzugsweise um Cyclohexyl.

R in der Bedeutung einer Arylgruppe kann unsubstituiertes Phenyl oder eine durch eine oder zwei Methylgruppen substituierte Phenylgruppe sein, wie Tolyl oder Xylyl, oder auch Naphthyl. Bevorzugt ist die Phenylgruppe. Stellt R eine Gruppe $-C_pH_{2p}$-dar, so kann es sich um geradkettige oder verzweigte Reste handeln, wie Aethylen, Propylen, Trimethylen, Tetramethylen, Hexamethylen, Octamethylen und Dodecamethylen. Vorzugsweise bedeutet R eine Gruppe $-(CH_2)_p-$ mit p = 2 bis 12. Bedeutet R eine Gruppe der Formel IV, so ist diese vorzugsweise in 4,4'-Stellung an die N-Atome gebunden.

R kann in der Bedeutung einer Arylengruppe mit 6-10 C-Atomen z.B. eine m-Phenylen-, p-Phenylen-, 1,3-Naphthylen-, 1,4-Naphthylen-, 1,5-Naphthylen- oder 2,6-Naphthylengruppe bedeuten.

Wenn R eine Gruppe der Formel IV bedeutet, steht T vorzugsweise für die Methylengruppe, O oder $So_2$.

Bevorzugte Verbindungen der Formel I sind solche, worin $R_1$ und $R_2$ je ein Wasserstoffatom bedeuten und R, falls n = 1 ist, für Wasserstoff, Alkyl mit 1-8 C-Atomen, Allyl, Cyclohexyl, Phenyl oder Benzyl steht, oder, falls n = 2 ist, für $-(CH_2)_p-$ mit p = 2-12, m- oder p-Phenylen oder für eine Gruppe der Formel IV steht, worin T die Methylengruppe, O oder $So_2$ bedeutet.

Besonders bevorzugt sind Verbindungen der Formel I, worin $R_1$ und $R_2$ ein Wasserstoffatom und R, falls n = 1 ist, Allyl, oder falls n = 2 ist, $-(CH_2)_6-$ oder

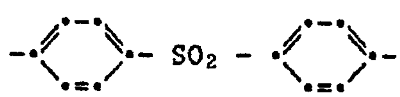 und insbesondere 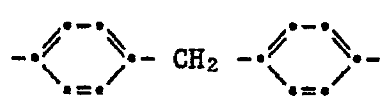

bedeuten. Ganz besonders bevorzugt enthalten die erfindungsgemässen Gemische als Komponente (b) Allyl-bicyclo[2.2.]hept-5-en-2,3-dicarbonsäure-N-allylimid, Bis[4-(allyl-bicyclo[2.2.1]hept-5-en-2,3-di-

carbonsäureimidophenyl)]methan oder N,N'-Hexamethylen-bis-(allylbicyclo-2.2.1]hept-5-en-2,3-dicarbonsäureimid) oder ein Gemisch dieser Verbindungen.

Beispiele für spezifische Verbindungen der Formel I sind:
Allyl-bicyclo[2.2.1]hept-5-en-2,3-dicarbonsäure-N-methylimid,
Allyl-bicyclo[2.2.1]hept-5-en-2,3-dicarbonsäure-N-allylimid,
Allyl-bicyclo[2.2.1]hept-5-en-2,3-dicarbonsäure-N-(2-äthylhexyl)-imid,
Allyl-bicyclo[2.2.1]hept-5-en2,3-dicarbonsäure-N-cyclohexylimid,
Allyl-bicyclo[2.2.1]hept-5-en-2,3-dicarbonsäure-N-phenylimid,
Allyl-bicyclo[2.2.1]hept-5-en-2,3-dicarbonsäure-N-benzylimid,
N,N'-Aethylen-bis-(allyl-bicyclo[2.2.1]hept-5-en-2,3-dicarbonsäureimid),
N,N'-Hexamethylen-bis-(allyl-bicyclo[2.2.1]hept-5-en-2,3-dicarbonsäureimid),
N,N'-Dodecamethylen-bis-(allyl-bicyclo[2.2.1]hept-5-en-2,3-dicarbonsäureimid),
Bis-[4-(allyl-bicyclo[2.2.1]hept-5-en2,3-dicarbonsäureimidophenyl)]methan,
Bis[4-(methallyl-bicyclo[2.2.1]hept-5-en-2,3-dicarbonsäureimidophenyl)]methan,
N,N'-p-Phenylen-bis(allyl-bicyclo[2.2.1]hept-5-en-2,3-dicarbonsäureimid),
Bis[4-(allyl-bicyclo[2.2.1]hept-5-en-2,3-dicarbonsäureimidophenyl)]äther,
Bis[4-(allyl-bicyclo[2.2.1]hept-5-en-2,3-dicarbonsäureimidophenyl)]sulfon,
Allyl-methyl-bicyclo[2.2.1]hept-5-en-2,3-dicarbonsäure-N-allylimid,
Allyl-methyl-bicyclo[2.2.1]hept-5-en-2,3-dicarbonsäure-N-(2äthylhexyl)imid,
Allyl-methyl-bicyclo[2.2.1]hept-5-en-2,3-dicarbonsäure-N-phenylimid,
N,N'-Hexamethylen-bis-(allyl-methyl-bicyclo[2.2.1]hept-5-en,2,3-dicarbonsäureimid),
Bis[4-(allyl-methyl-bicyclo[2.2.1]hept-5-en-2,3-dicarbonsäureimidophenyl)]methan, Bis[4-(methallyl-methyl-bicyclo[2.2.1]hept-5-en-2,3-dicarbonsäureimidophenyl)]sulfon.

Die Imide der Formel I können auf an sich bekannte Weise, z.B. analog dem in der europäischen Patentanmeldung 105 024 beschriebenen Verfahren durch Umsetzen eines Anhydrids der Formel IX

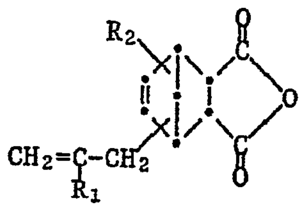

(IX)

mit einer Verbindung der Formel X

$$(H_2N)_n\text{—}R \qquad (X),$$

worin

R, $R_1$, $R_2$ und n die unter Formel I angegebene Bedeutung haben, bei erhöhter Temperatur und unter Abdestillieren des bei der Reaktion entstehenden Wassers hergestellt werden. Sofern es sich bei den Verbindungen der Formel X um Ammoniak oder niedrigsiedende Monoamine handelt, ist ein Ueberschuss dieser Reaktanden zu empfehlen. Diamine sind vorteilhaft in stöchiometrischem Verhältnis einzusetzen. Die Umsetzung kann ohne Lösungsmittel oder in Gegenwart eines inerten Lösungsmittels, das für die azeotrope Entfernung des Wassers verwendbar ist (Schleppmittel) erfolgen. Die Temperatur der Umsetzung kann zwischen 100 und 250°C liegen.

Wenn in den Verbindungen der Formel II R' $-C_qH_{2q}-$ oder $-C_rH_{2r}O-$ darstellt, so kann es sich um geradkettige oder verzweigte Alkylen-bzw. Alkylenoxygruppen handeln. Als Beispiele seien genannt: 1,2-Aethylen, 1,3- und 1,2-Propylen, Tetramethylen, Pentamethylen, 2,2-Dimethyl-1,3-propylen, Hexamethylen, Heptamethylen, Octamethylen, Decamethylen, Dodecamethylen, Tetradecamethylen, Pentadecamethylen, Hexadecamethylen, Octadecamethylen und Eicosylen; Aethylenoxy, n-Propylenoxy, 1,2-Propylenoxy, n-Butylenoxy, n-Pentylenoxy oder n-Hexylenoxy. Bevorzugt sind geradkettige Gruppen $-C_qH_{2q}-$ oder $-C_rH_{2r}-O-$ mit q = 2-6, besonders 2-4 C-Atomen, und r = 2-4 C-Atomen.

$R_1$ und $R_2$ stellen in Formel II bevorzugt je ein Wasserstoffatom dar.

Besonders bevorzugt sind Verbindungen der Formel II, worin R' $-(CH_2)_q-$ mit q = 2-4, meta- oder para-Phenylen, meta- oder para-Phenylenoxy bedeutet.

Die Verbindungen der Formel II können auf an sich bekannte Weise hergestellt werden, indem man eine Verbindung der Formel XI

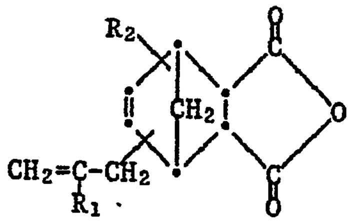

(XI)

bei erhöhter Temperatur und unter Abdestillieren des bei der Reaktion entstehenden Wassers mit einer Verbindung der Formel XII

$$[H_2N-R']_3-X \qquad (XII)$$

umsetzt, wobei für $R_1$, $R_2$, R′ und X das oben Angegebene gilt.

Die Umsetzung kann ohne Lösungsmittel oder in Gegenwart eines inerten Lösungsmittels, das für die azeotrope Entfernung des Wassers verwendbar ist (Schleppmittel, wie Toluol und Xylole) erfolgen. Die Temperaturen für die Umsetzung in Gegenwart eines Lösungsmittels können zwischen 100°C und Rückflusstemperatur liegen. Die Umsetzung in der Schmelze erfolgt zweckmässig bei Atmosphärendruck bei Temperaturen zwischen 100 und 250°C, insbesondere 130 und 220°C. Die Umsetzung in Gegenwart eines inerten Lösungsmittels ist bevorzugt.

Verbindungen der Formel II, worin

$$X \; -\overset{|}{\underset{|}{P}}=O \text{ oder } -\overset{|}{P}-$$

und R′ $-C_rH_{2r}-O-$, meta- oder para-Phenylenoxy darstellen, können nach einem abgeänderten Verfahren auch dadurch erhalten werden, dass man eine Verbindung der Formel XIII

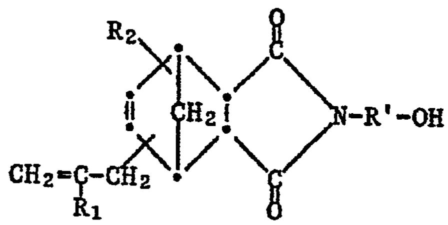

(XIII),

worin $R_1$ und $R_2$ die unter Formel II angegebene Bedeutung haben und R′ $-C_rH_{2r}-O-$, meta- oder para-Phenylenoxy darstellt, in Gegenwart einer Base im Molverhältnis von mindestens 1:3 mit einem Phosphoroxyhalogenid oder einem Phosphortrihalogenid, besonders Phosphoroxychlorid, Phosphortribromid oder Phosphortrichlorid, umsetzt.

Als Basen eignen sich z.B. tertiäre Amine, wie Triäthylamin, Tri-n-butylamin, Pyridin und Dimethylanilin. Diese Umsetzung wird zweckmässig in einem inerten organischen Lösungsmittel, wie Toluol oder Xylolen, bei Temperaturen zwischen -50°C und +50°C, besonders 0-30°C, durchgeführt.

Unter Umständen kann es zweckmässig sein, bei den in Gegenwart eines inerten Lösungsmittels durchgeführten obigen Reaktionen ein Antioxidans mitzuverwenden.

Die Verbindungen der Formeln XI, XII und XIII sind bekannt oder können nach an sich bekannten Methoden hergestellt werden. Verbindungen der Formel XI können z.B. nach dem in der US-Patent 3.105.839 beschriebenen Verfahren erhalten werden, indem man Natrium-Cyclopentadienid oder Natrium-Methylcyclopentadienid mit einem Allyl- oder Methallylhalogenid umsetzt, worauf sich eine Diels-Alser-Reaktion mit Maleinsäureanhydrid anschliesst. Obhgleich ind er US Patentschrift angegeben wird, dass die Allylgruppe in 7-Stellung des biscyclischen Systems gebunden ist. zeigen neuere Unterschungen, dass eine isomere Mischung in Bezug auf die Stellung der Allyl- bzw. Methallylgrupp (in 1- und 6-Position) und auch auf die Endo- und Exokonfiguration des Anhydridteils gebildet wird. Verbindungen der Formel XIII können durch Umsetzung eines Anhydrids der Formel XI mit den entsprechenden Aminoalkoholen $H_2N-R'-OH$ hergestellt werden, wobei diese Umsetzung ebenfalls bei erhöhter Temperatur und unter Abdestillieren des bei der Reaktion entstehenden Wassers vorgenommen wird. Verbindungen der Formel XII mit

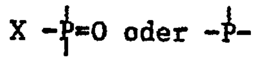

können z.B. durch Umsetzung von Aminoalkoholen $H_2N$-R'-OH mit Phosphoroxyhalogeniden oder Phosphortrihalogeniden erhalten werden. Die Präpolymeren von Verbindungen der Formel I oder II können durch bis zu fünfstündigem Erhitzen einer Verbindung der Formel I oder II auf Temperaturen zwischen 180° und 220°C erhalten werden.

In den Verbindungen der Formel III kommen als organische Reste R" bei m = 2 z.B. in Betracht: $-C_pH_{2p}-$ mit p = 2-20, besonders $-(CH_2)_p-$ mit p = 2-12, $-CH_2CH_2SCH_2CH_2-$, Arylen mit 6-10 C-Atomen, Xylylen, Cyclopentylen, Cyclohexylen, 1,4-Bis(methylen)cyclohexylen, der Rest des Bicyclohexylmethans oder Reste der Formeln XIV oder XV

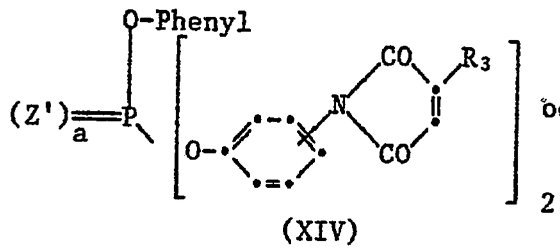

(XIV)

oder

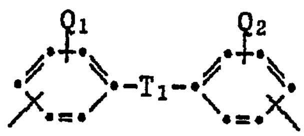

(XV)

Stellt m die Zahl 3 dar, so bedeutet R" z.B. einen Rest der Formel XVI

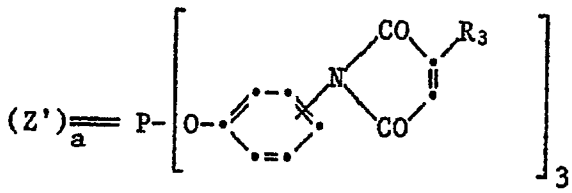

(XVI).

In den obigen Formeln XIV bis XVI bedeutet $T_1$ Methylen, Isopropyliden, CO, O, S, $SO_2$, $-P{=}O(Q_3)$, $-NQ_3-$ ($Q_3$ = $C_1$-$C_4$-Alkyl), -N=N-, -CONH-, -COO-, $-NQ_3$-CO-X'-CO-$NQ_3-$, -O-CO-X'-CO-O-,

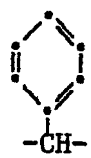

oder

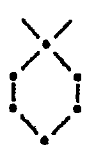

a ist 0 oder 1,

Z' stellt O oder S dar,

$Q_1$ und $Q_2$ bedeuten unabhängig voneinander ein Halogenatom, besonders Chlor oder Brom, Methyl oder Aethyl und insbesondere ein Wasserstoffatom,

X' ist die direkte Bindung, $-C_bH_{2b}-$ mit b = 1-12, Arylen mit 6-10 C-Atomen, Xylylen, Cyclopentylen oder Cyclohexylen und $R_3$ hat die oben angegebene Bedeutung.

Als spezifische Beispiele für Maleinimide der Formel III, welche in den erfindungsgemässen Gemischen enthalten sein können, seien genannt:

N,N'-Aethylen-bis-maleinimid,
N,N'-Hexamethylen-bis-maleinimid,
N,N'-m-Phenylen-bis-maleinimid,
N,N'-p-Phenylen-bis-maleinimid,
N,N'-4,4'-Diphenylmethan-bis-maleinimid,
N,N'-4,4'-3,3'-Dichlor-diphenylmethan-bis-maleinimid,
N,N'-4,4'-Diphenyläther-bis-maleinimid,
N,N'-4,4'-Diphenylsulfon-bis-maleinimid,
N,N'-m-Xylylen-bis-maleinimid,
N,N'-p-Xylylen-bis-maleinimid,
N,N'-4,4'-2,2-Diphenylpropan-bis-maleinimid,

das N,N'-Bis-maleinimid des 4,4'-Diamino-triphenylphosphats,
das N,N'-Bis-maleinimid des 4,4'-Diamino-triphenylphosphits,
das N,N'-Bis-maleinimid des 4,4'-Diamino-triphenylthiophosphats,
das N,N',N"-Trismaleinimid des Tris-(4-aminophenyl)-phosphats,
das N,N',N"-Trismaleinimid des Tris-(4-aminophenyl)-phosphits und
das N,N',N"-Trismaleinimid des Tris-(4-aminophenyl)-thiophosphats.

Als Verbindungen der Formel III sind solche bevorzugt, worin m die Zahl 2, $R_3$ ein Wasserstoffatom und $R''$-$(CH_2)_p$- mit p = 2-12, m- oder p-Phenylen, m- oder p-Xylylen, 1,4-Cyclohexylen, 1,4-Bis(methylen)-cyclohexylen, den Rest des 4,4'-Bicyclohexylmethans und von allem einen in 4,4'-Stellung gebundenen Rest der Formel XV bedeuten, worin $Q_1$ und $Q_2$ je ein Wasserstoffatom und $T_1$ O, $CH_2$ oder $SO_2$ darstellen. Ganz besonders bevorzugt ist das N,N'-4,4'-Diphenylmethanbismaleinimid.

Die Herstellung der erfindungsgemässen Stoffgenische kann in an sich bekannter Weise durch Vermahlen und Vermengen oder durch Vermischen in einem Lösungsmittel, z.B. Dichlormethan oder Methyläthylketon, vorgenommen werden und erfolgt vorzugsweise durch Aufschmelzen der Komponenten, wobei man die Komponente (a) und (b) mit der gegebenenfalls zu verwendenden Komponente (c) vermischt und zwischen 70 und 170°C aufschmizt. Verwendet man bei der Herstellung der erfindungsgemässen Stoffgemische als Komponente (a) oder (b) ein Präpolymer und vermischt man dieses mit dem Monomer oder Präpolymer der anderen Komponente (b) bzw. (a), so erfolgt das Aufschmelzen zweckmässig zwischen 100 und 170°C.

Den erfindungsgemässen Gemischen können auch übliche Zusatzstoffe, wie Füllstoffe, Weichmacher, Pigmente, Farbstoffe, Formtrennmittel oder flammhemmende Stoffe, zugesetzt werden.

Die Verarbeitung der erfindungsgemässen Stoffgemische kann in einem inerten organischen Lösungsmittel vorgenommen werden, erfolgt jedoch vorzugsweise aus der Schmelze und gegebenenfalls in Gegenwart eines Härtungskatalysators.

Als inerte organische Lösungsmittel eignen sich z.B. N,N-Dimethylformamid, N,N-Dimethylacetamid, N-Methylpyrrolidon, Dichlormethan, Aceton, Toluol, Xylole, Methyläthylketon, und Aehylenglykolmonoalkyl- oder -dialkyläther mit 1-4 C-Atomen in den Alkylgruppen.

Als Katalysatoren können z.B. Imidazole, tertiäre Amine, organische Metallsalze, Peroxide sowie Brønsted-Oxosäuren oder Derivate davon, besonders deren Ester, Anhydride, Halogenide oder Amide bzw. Ammoniumsalze mit Stickstoff enthaltenden Basen, und Lewissäuren oder Komplexe von Lewissäuren mit Basen, insbesondere mit Aminen, eingesetzt werden.

Als Imidazole können beispielsweise 2-Methylimidazol, 2-Undecylimidazol, 2-Heptadecylimidazol, 2-Phenylimidazol, 2-Ethyl-4-methylimidazol, 1-Benzyl-2-methylimidazol, 1-Propyl-2-methylimidazol, 1-Cyanoäthyl-2-methylimidazol, 1-Cyanoäthyl-2-äthyl-4-methylimidazol, 1-Cyanoäthyl-2-undecylimidazol, 1-Cyanoäthyl-2-phenylimidazol, 1-Guanaminoäthyl-2-methylimidazol und Additionsprodukte zwischen Imidazol und Trimellitsäure verwendet werden.

Geeignete tertiäre Amine sind z.B. N,N-Dimethylbenzylamin, N,N-Dimethylanilin, N,N-Dimethyltoluidin, N,N-Diemthyl-p-anisidin, p-Halogen-N,N-dimethylanilin, 2-N-Ethylanilinoethanol, Tri-n-butylamin, Pyridin, Chinolin, N-Methylmorpholin, Triethanolamin, Triethylendiamin, N,N,N',N'-Tetramethylbutandiamin und N-Methylpiperidin.

Als organische Metallsalze eignen sich beispielsweise Bleinaphthenat, Bleistearat, Zinknaphthenat, Zinkoctoat, Zinnoleat, Dibutylzinnmaleat, Mangannaphthenat, Kobaltnaphthenat und Acetylacetoneisen.

Geeignete Peroxide sind beispielsweise Benzoylperoxid, Lauroylperoxid, Octanoylperoxid, Acetylperoxid, p-Chlorbenzoylperoxid, Di-tert.-Butyldiperphthalat, Dicumylperoxid, Cyclohexanonperoxid, tert.-butylhydroperoxid und Diisopropylperoxydicarbonat.

Als Oxosäuren können z.B. anorganische bzw. Mineralsäuren oder organische Säuren, wie z.B. organische Phosphor-Sauerstoff-Säuren, organische Schwefel-Sauerstoff-Säuren oder Halogen enthaltende Carbonsäuren genannt werden.

Als Mineralsäuren können z.B. genannt werden Perchlorsäure, Fluorsulfonsäure, Chlorsulfonsäure, Schwefelsäure, Phosphorsäure, Polyphosphorsäure, phosphorige Säure und unterphosphorige Säure.

Geeignete organische Phosphor-Sauerstoff-Säuren sind z.B. Phosphon- und Phosphinsäuren. Es kommen jeweils P-Alkyl oder P-Arylderivate in Frage, z.B. bevorzugt solche mit je 1-6 C-Atomen in den Alkylgruppen bzw. 6-10 C-Atomen in den Arylgruppen, insbesondere die Phenylphosphon- bzw. Phenylphosphinsäure.

Als organische Schwefel-Sauerstoffsäuren können z.B. aliphatische und besonders aromatische Sulfonsäuren, wie Methansulfonsäure, Benzolsulfonsäure, Naphthalin-2-sulfonsäure, oder insbesonder der p-Toluolsulfonsäure, verwendet werden.

Als Halogen enthaltende Carbonsäuren kommen z.B. Chloressigsäure Dichloressigsäure, Trichloressigsäure und Trifluoressigsäure in Frage.

Geeignete Lewis-Säuren sind z.B. Halogenide von Elementen aus der Gruppe II, III, IV oder V des periodischen Systems der Elemente.

Besonders geeignete Lewis-Säuren sind Eisentrichlorid, Zinntetrachlorid, Antimonpentafluorid und insbesondere Aluminiumchlorid, Zinkchlorid, Bortrichlorid und Bortrifluorid.

Komplexe von Lewis-Säuren, die den erfindungsgemässen Gemischen als Katalysatoren eingesetzt werden können, sind u.a. der Aethylamin/Bortrichlorid-Komplex, der N,N-Diemthyl-n-octylamin/Bortrichlorid-Komplex, der Acetylacetanilid/Bortrifluorid-Komplex, der Dimethylanilin/Bortrichlorid-Komplex sowie der Tri-n-octylphosphin/Bortrichldorid-Komplex.

Die Menge des verwendeten Katalysators kann weniger als 5 Gew.-%, bezogen auf das Gesamtgewicht des härtbaren Gemisches, betragen.

Die Härtung der erfindungsgemässen Gemische wird im allgemeinen bei Temperaturen zwischen 150 und 350°C, besonders, zwischen 180 und 300°C, vorgenommen.

Die erfindungsgemässen Gemische stellen viskose Flüssigharze bis niedrigschmelzende Festharze dar und zeichnen sich durch eine gute Reaktivität und hohe mechanische Eigenschaften der damit gehärteten Produkte aus, wie gute Biege- und Schlagbiegefestigkeit. Die gehärteten Produkte weisen hohe Glasumwandlungstemperaturen auf und sind wenig spröde. Die erfindungsgemässen Stoffgemische können ferner leicht aus der Schmelze, besonders auch ohne Zusatz von schwerflüchtigen Lösungsmitteln, appliziert werden, beispielsweise zum Imprägnieren von Glasfaser-, Kohlenstoffaser- oder Aramidfaser-Geweben, wie Fasergewebe aus der unter dem Handelsnamen Kevlar® bekannten Poly(1,4-phenylenterephthalamiden).

Die erfindungsgemässen Stoffgemische können vielseitig angewendet werden, z.B. als Laminier- oder Elektroharze, als Hochtemperatur-Klebstoffe oder zur Herstellung von Beschichtungen oder Formkörpern, als Ueberzugsmaterial, als Matrixharze für faserverstärkte Kunststoffe, wie Prepregs und Verbundwerkstoffe, oder als elektrische Isolierstoffe.

Gegenstand der Erfindung sind somit auch die Verwendung der erfindungsgemässen Gemische zur Herstellung von Formkörpern, Beschichtungen oder Verklebungen mittels Härtung und die so erhaltenen Produkte.

Die folgenden Beispiele erläutern die Erfindung näher.

Ausgangsstoffe

1. Herstellung von bis-[4-(allyl-bicyclo[2.2.1]hept-5-en2,3-dicarbonsäureimidophenyl)]-methan

102 g Allyl-bicyclo[2.2.1]hept-5-en2,3-dicarbonsäureanhydrid, hergestellt gemäss Beispiel 1 des US Patents 3 105 839, und 198,3 g 4,4'-Diaminodiphenylmethan werden in 1000 ml Toluol vorgelegt und 16 Stunden am Wasserabscheider unter Rückfluss erhitzt. Die klare Reaktionslösung wird am Rotationsverdampfer eingeengt und der Rückstand 2 Stunden bei 120 °C im Hochvakuum getrocknet. Man erhält 380 g eines rotgelben, bei Raumtemperatur festen Harzes mit einem Erweichungspunkt von 56°C und einem durch Gelpermeationschromatographie (Tetrahydrofuran) ermittelten Molekulargewicht von 550 ($\bar{M}n$) und 571 ($\bar{M}w$).

| Analyse: | % C | % H | % N |
|---|---|---|---|
| berechnet für $C_{37}H_{34}N_2O_7$ | 77,87 | 6,01 | 4,91 |
| gefunden | 77,71 | 6,06 | 4,96 |

2. N,N'-Hexamethylen-bis-(allyl-bicyclo[2.2.1]hept-5-en-2,3-dicarbonsäureimid

Hergestellt gemäss Beispiel 9 der EP-Anmeldung 0 105 024.

3. Herstellung von Tris-(allyl-bicyclo[2.2.1]hept-5-en-2,3-dicarbonsäureimid des Tris-(4-aminophenyl)-phosphats

61,2 g Allylnadic-anhydrid und 37,1 g Tris-(4-aminophenyl)-phosphat [Fp. 152-155°C, hergestellt gemäss US-PS 3.415.779, Produkt I] werden gemischt und unter Rühren bei 1,06 Pa auf 155°C erhitzt. Man giesst das erhaltene rotbraune Harz auf eine Blechtasse aus. Das Harz erstarrt sofort; es weist eine Glasumwandlungstemperatur von 67°C auf. Ausbeute 93 g (quantitativ).
Elementaranalyse für $C_{54}H_{48}N_3O_{10}P$:
berechnetC 69,74 % H 5,20 % N 4,52 % P 3,33% freies Amin 0 %
gefundenC 69,41 % H 5,20 % N 4,49 % P 3,37 % freies Amin 0,07 %.

IR-Spektrum: 1201 $cm^{-1}$ Phosphonylgruppe, 1620 $cm^{-1}$ cyclische Doppelbindung, 1640 $cm^{-1}$ Allylgruppe, 1710 $cm^{-1}$ und 1776 $cm^{-1}$ für die Carbonylgruppe.

4. 2,2-Bis-(4-cyanatophenyl)-propan

Hergestellt aus Bisphenol A und Bromcyan gemäss Beispiel 1 der DE-OS 25 29 486.

5. 1,4-Dicyanatobenzol

Hergestellt aus Hydrochinon und Chlorcyan gemäss Beispiel 9 der DE-OS 25 29 486.

Beispiel 1: Es werden 100 g Bis-[4-allyl-bicyclo[2.2.1]hept-5-en-2,3-dicarbonsäureimidophenyl)]-methan mit 100 g 2,2-Bis-(4-cyanatophenyl)-propan vermischt und bei 140°C aufgeschmolzen. Man erhält ein gelbe, bei Raumtemperatur gerade noch flüssige Mischung mit $\eta_{80°C}$ = 550 mPas. Das Harz ist unter anderem gut löslich in Toluol, Xylol, Aceton, Methyläthylketon, Tetrahydrofuran, Dioxan, Methyldichlorid und Dimethylformamid. Bei der Differentialthermoanalyse (System TA 3000 der Fa. Mettler AG, Greifensee, CH) zeigt das Gemisch einen Reaktionsbeginn $T_A$ bei 150°C, ein Reaktionsmaximum $T_{max}$ bei 260°C und ein Abklingen der Reaktion $T_E$ bei 310°C. Die integrale Reaktionswärme $\Delta H$ der Härtung beträgt 541 kJ/kg. Das Gemisch wird zu Platten (120 x 120 x 4 mm³) verarbeitet und während 3 Stunden bei 200°C, 1 Stunde bei 220°C und 6 Stunden bei 250°C gehärtet. Nach dem Abkühlen zerschneidet man die Platte zu Prüfstäben, an denen folgende Eigenschaften gemessen werden:
Biegefestigkeit nach ISO 178 = 128 N/mm²
Randfaserdehnung nach ISO 178 = 4,3 %
Schlagbiegefestigkeit nach VSM 77105 = 10,6 kJ/m²
Glasumwandlungstemperatur (Tg) = 260°C.

Beispiel 2: 16 g Bis-[4-(allyl-bicyclo[2.2.1]hept-5-en-2,3-dicarbonsäureimidophenyl)]-methan werden während einer Zeitdauer von 4 Stunden bei 200°C vorreagiert. Man erhält ein Präpolymer mit einem Erweichungspunkt von 86°C und einem Molekulargewicht von 867 ($\overline{M}n$) und 4060 ($\overline{M}w$). Anschliessend werden bei 150°C 16 g 2,2-Bis-(4-cyanatophenyl)-propan zugegeben und 10 Minuten gerührt. Das klare gelbe Harz (Erweichungspunkt 74°C) giesst man als heisses, dünnflüssiges Harz in eine Stahlform von 80 x 60 x 4 mm³ und härtet 2 Stunden bei 180°C, 1 Stunde bei 220°C und 6 Stunden bei 250°C. Folgende Eigenschaften werden gemessen:
Schlagbiegefestigkeit = 16,6 kJ/m²
Tg = 258°C.

Beispiel 3: Nach dem in Beispiel 1 beschriebenen Verfahren wird eine Mischung aus 81 g Bis-[4-(allyl-bicyclo[2.2.1]hept-5-en-2,3-dicarbonsäureimidophenyl)]-methan und 27 g 2,2-Bis-(4-cyanatophenyl)-propan hergestellt, zu Platten vergossen und gehärtet. Folgende Eigenschaften werden gemessen:
Biegefestigkeit = 94 N/mm²
Randfaserdehnung = 3,2 %
Schlagbiegefestigkeit = 11,3 kJ/m²
Tg= 294°C.

Beispiel 4: Nach dem in Beispiel 1 beschriebenen Verfahren werden 27 g Bis-[4-(allyl-bicyclo[2.2.1]hept-5-en-2,3-dicarbonsäureimidophenyl)]-methan und 81 g 2,2-Bis-(4-cyanatophenyl)-propan vermischt, zu Platten vergossen und gehärtet. Folgende Eigenschaften werden gemessen:
Biegefestigkeit = 113 N/mm²
Randfaserdehnung = 3,7 %
Schlagbiegefestigkeit = 9,6 kJ/m²
Tg = 242°C.

Beispiel 5: Eine nach Beispiel 1 hergestellte Harzmischung wird bei 100°C mit 0,2 Gew.% Zinn-octoat versetzt, zu Platten vergossen und 2 Stunden bei 120°C, 2 Stunden bei 140°C, 1 Stunde bei 200°C und 6 Stunden bei 250°C gehärtet. Folgende Eigenschaften werden gemessen:
Biegefestigkeit = 118 N/mm²
Randfaserdehnung = 4,5 %
Schlagbiegefestigkeit = 21 kJ/m²
Tg = 260°C
Tg nach 2 Tagen in $H_2O$ bei 71°C = 221°C.

Beispiel 6: 50 g N,N'-Hexamethylen-bis-(allyl-bicyclo[2.2.1]hept-5-en-2,3-dicarbonsäureimid und 50 g 2,2-Bis-(4-cyanatophenyl)-propan werden bei 120°C aufgeschmolzen, auf 100°C abgekühlt und mit 0,2 g Zinn-octoat vermischt. Die klare, flüssige Harzmischung wird dann 2 Stunden bei 120°C, 2 Stunden bei 140°C, 1 Stunde bei 200°C und 6 Stunden bei 250°C gehärtet. Folgende Eigenschaften werden gemessen:
Biegefestigkeit = 137 N/mm²

Randfaserdehnung = 6,3 %
Schlagbiegefestigkeit = 30,7 kJ/m²
Tg = 238°C.

Beispiel 7: Eine Mischung aus 60 g Bis-[4-(allyl-bicyclo[2.2.1]hept-5-en-2,3-dicarbonsäureimido-phenyl)]-methan und 60 g 1,4-Dicyanatobenzol wird bei 120°C aufgeschmolzen, zu Platten vergossen und während 3 Stunden bei 180°C, 1 Stunde bei 220°C und 6 Stunden bei 250°C gehärtet. Folgende Eigenschaften werden gemessen:
Biegefestigkeit = 102 N/mm²
Randfaserehnung = 3,0 %
Schlagbiegefestigkeit = 11,2 kJ/m²
Tg = 258°C.

Beispiel 8: Eine Mischung aus 50 g Bis-[4-(allyl-bicyclo[2.2.1]hept-5-en-2,3-dicarbonsäureimido-phenyl)]-methan, 50 g N,N'-4,4'-Diphenylmethan-bis-maleinimid, 50 g 2,2-Bis-(4-cyanatophenyl)-propan und 0,3 g Zinn-octoat wird 2 Stunden bei 120°C, 2 Stunden bei 250°C gehärtet. An den so erhaltenen Prüfkörpern werden die folgenden Eigenschaften bestimmt:
Biegefestigkeit = 139 N/mm²
Randfaserdehnung = 5,2 %
Schlagbiegefestigkeit = 24,1 kJ/m²
Tg = 300°C.

Beispiel 9: Eine Mischung aus 25 g Bis-[4-allyl-bicyclo[2.2.1]hept-5-en-2,3-dicarbonsäureimido-phenyl]-m ethan, 25 g N,N'-Diphenylmethan-bis-maleinimid, 50 g 2,2-Bis-(4-cyanatophenyl)-propan und 0,3 Zinn-octoat wird wie in Beispiel 8 beschrieben gehärtet. Folgende Eigenschaften wurden gemessen:
Biegefestigkeit = 127 N/mm²
Randfaserdehnung = 5 %
Schlagbiegefestigkeit = 26,8 kJ/m²
Tg = 298°C.

Beispiel 10: 2 g 2,2-Bis-(4-cyanatophenyl)-propan und 2 g N,N',N"-Tris-(allyl-bicyclo[2.2.1]hept-5-en-2,3-dicarbonsäureimid) des Tris-(4-aminophenyl)-phosphats werden in einem Reagenzglas bei 120°C aufgeschmolzen und 2 Stunden bei 160°C, 2 Stunden bei 180°C, 2 Stunden bei 200°C und 6 Stunden bei 250°C gehärtet. Man erhält einen klaren braunroten Festkörper mit einem Tg-Wert von 280°C.

## Patentansprüche

1. Heisshärtbare Gemische, enthaltend
(a) 5 bis 95 Gew.-% mindestens einer aromatischen Di- oder Polycyanatverbindung oder eines Präpolymeren davon,
(b) 95 bis 5 Gew.-% mindestens einer Verbindung der Formel I oder II

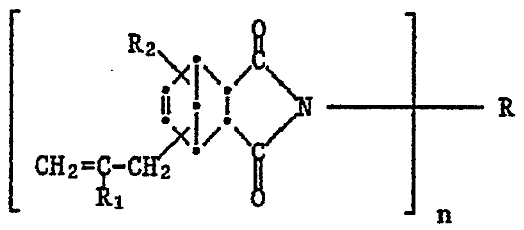

(I)

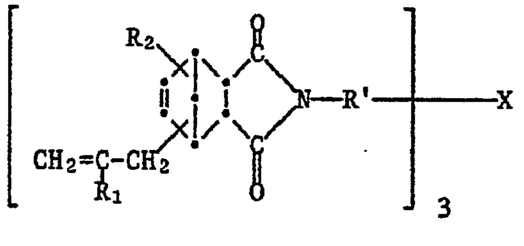

(II)

oder eines Präpolymeren einer Verbindung der Formel I oder II und, bezogen auf die Summe von (a) und (b),

(c) 0 bis 50 Gew.-% mindestens einer Verbindung der Formel III

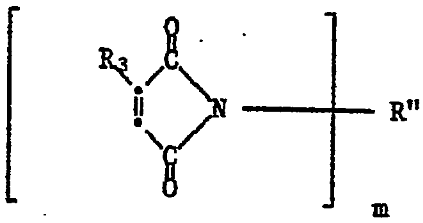

(III),

worin,
$R_1$, $R_2$ und $R_3$ unabhängig voneinander je ein Wasserstoffatom oder Methyl bedeuten,
n 1 oder 2 und m 2 oder 3 bedeuten,
R, falls n 1 bedeutet, ein Wasserstoffatom, Alkyl mit 1-12 C-Atomen, Alkenyl mit 3-6 C-Atomen, Cycloalkyl mit 5-8 C-Atomen, Aryl mit 6-10 C-Atomen oder Benzyl, oder, falls n 2 bedeutet, $-C_pH_{2p}-$ mit p = 2-20, Arylen mit 6-10 C-Atomen oder eine Gruppe der Formel IV

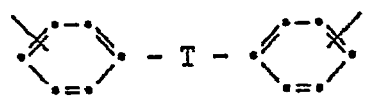

(IV)

mit T = Methylen, Isopropyliden, CO, O, S oder $SO_2$ bedeutet,
X für

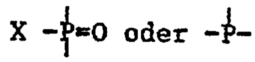

oder

steht und R' $-C_qH_{2q}-$ mit q = 2-20, $-C_rH_{2r}-O-$ mit r = 2-6, meta- oder para-Phenylen, meta- oder para-Phenylenoxy bedeutet, wobei das Sauerstoffatom an die Gruppe X gebunden ist, und
R" einen m-wertigen organischen Rest mit 2-30 C-Atomen darstellt.

2. Gemische gemäss Anspruch 1, enthaltend die Komponente (a) in einer Menge von 20 bis 80 Gew.-%, die Komponente (b) in einer Menge von 80 bis 20 Gew.-% und die Komponente (c), bezogen auf die Summe von (a) und (b), in einer Menge von 0 bis 30 Gew.-%.

3. Gemische gemäss Anspruch 1, enthaltend als Komponente (a) eine Dicyanatverbindung oder eine Mischung aus einer Dicyanatverbindung mit dem entsprechenden Präpolymer.

4. Gemische gemäss Anspruch 1, enthaltend als Komponente (b) eine Verbindung der Formel I, worin $R_1$ und $R_2$ je ein Wasserstoffatom bedeuten und R, falls n = 1 ist, für Wasserstoff, Alkyl mit 1-8 C-Atomen, Allyl, Cyclohexyl, Phenyl oder Benzyl steht, oder, falls n = 2 ist, für $-(CH_2)_p-$ mit p = 2-12, m- oder p-Phenylen oder für eine Gruppe der Formel IV steht, worin T die Methylengruppe, O oder $SO_2$ bedeutet.

5. Gemische gemäss Anspruch 1, enthaltend als Komponente (b) eine Verbindung der Formel I, worin $R_1$ und $R_2$ ein Wasserstoffatom und R, falls n = 1 ist, Allyl, oder falls n = 2 ist, $-(CH_2)_6-$ oder

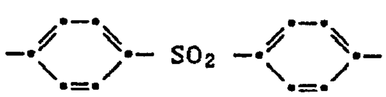

und insbesondere

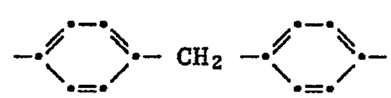

bedeuten.

6. Gemische gemäss Anspruch 1, enthaltend als Komponente (a) 2,2-Bis-(4-cyanatophenyl)-propan und als Komponente (b) Allyl-bicyclo[2.2.1]hept-5-en-2,3-dicarbonsäure-N-allylimid, Bis-[4-allylbicyclo[2.2.1]hept-5-en-2,3-dicarbonsäureimidophenyl]methan oder N,N'-Hexamethylen-bis-(allyl-methyl-bicyclo[2.2.1]hept-5-en-2,3-dicarbonsäureimid) oder ein Gemisch dieser Verbindungen.

7. Gemische gemäss Anspruch 1, enthaltend als Komponente (b) eine Verbindung der Formel II, worin X

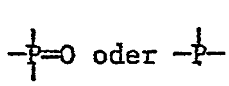

darstellt und R'-(CH2)- mit q = 2-4, meta- oder para-Phenylen, meta- oder para-Phenylenoxy bedeutet.

8. Gemische gemäss Anspruch 1, enthaltend als Komponente (c) eine Verbindung der Formel III, worin m die Zahl 2, $R_3$ ein Wasserstoffatom und R"-(CH2)- mit p = 2-12, m- oder p-Phenylen, m- oder p-Xylylen, 1,4-Cyclohexylen, 1,4-Bis(methylen)-cyclohexylen, den Rest des 4,4'-Bicyclohexylmethans und vor allem einen Rest der Formel

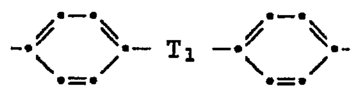

bedeuten, worin $T_1$ für 0, $CH_2$ oder $SO_2$ steht.

9. Gemische gemäss Anspruch 1, enthaltend als Verbindung der Formel III N, N'-4,4'-Diphenylmethan-bis-maleinimid.

## Claims

1. A hot-curable mixture containing
(a) 5 to 95% by weight of at least one aromatic di- or polycyanate compound or a prepolymer thereof,
(b) 95 to 5% by weight of at least one compound of the formula I or II

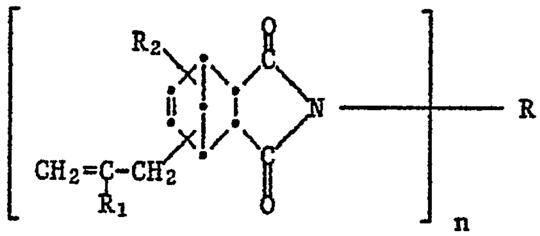

(I)

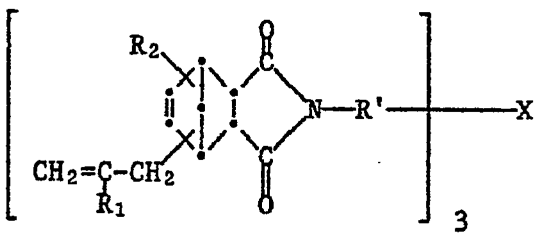

(II)

or of a prepolymer of a compound of the formula I or II and, based on the sum of (a) and (b),
(c) 0 to 50% by weight of at least one compound of the formula III

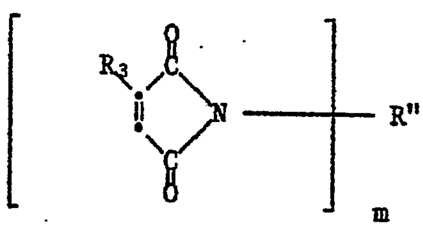

(III),

in which $R_1$, $R_2$ and $R_3$ independently of one another are each a hydrogen atom or methyl, n is 1 or 2 and m is 2 or 3, if n is 1, R is a hydrogen atom, alkyl of 1-12 C atoms, alkenyl of 3-6 C atoms, cycloalkyl of 5-8 C atoms, aryl of 6-10 C atoms or benzyl, or, if n is 2, R is $-C_pH_{2p}-$, where p = 2-20, arylene of 6-10 C atcms or a group of the formula IV

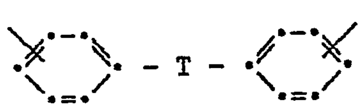

(IV)

where T-methylene, isopropylidene, CO, O, S or $SO_2$, X is -P-O or -Pand R' is $-C_qH2_q-$, where q = 2-20, $-C_rH_{2r}-O-$, where r = 2-6, meta- or para-phenylene or meta- or para-phenylenoxy, in which the oxygen atom is bonded to the group X, and R'' is an m-valent organic radical of 2-30 C atoms.

2. A mixture according to claim 1, containing component (a) in an amount of 20 to 80% by weight, component (b) in an amount of 80 to 20% by weight and component (c), based on the sum of (a) and (b), in an amount of 0 to 30% by weight.

3. A mixture according to claim 1, containing a dicyanate compound or a mixture of a dicyanate compound with the corresponding prepolymer as component (a).

4. A mixture according to claim 1, containing, as component (b), a compound of the formula I in which $R_1$ and $R_2$ are each a hydrogen atom and, if n is 1, R is hydrogen, alkyl of 1-8 C atoms, allyl, cyclohexyl, phenyl or benzyl, or, if n is 2, R is $-(CH_2)_p-$, where p = 2-12, m- or p=phenylene or a group of the formula IV, in which T is the methylene group, O or $SO_2$.

5. A mixture according to claim 1, containing, as component (b), a compound of the formula I in which $R_1$ and $R_2$ are a hydrogen atom and, if n is 1, R is allyl, or, if n is 2, R is $-(CH_2)_6-$ or

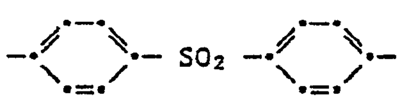 and, in particular, 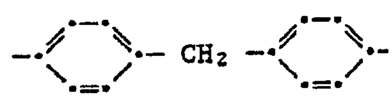

6. A mixture according to claim 1, containing 2,2-bis-(4-cyanatophenyl)propane as component (a) and N-allyl-allyl-bicyclo[2.2.1]hept-5-ene-2,3-dicarboximide, bis-[4-allyl-bibyblo[2.2.1]hept-5-ene-2,3-dicarboximidophenyl]-methane or N,N'-hexamethylene-bis-(allyl-methylbicyclo-[2.2.1]hept-5-ene-2,3-dicarboximide or a mixture of these compounds as component (b).

7. A mixture according to claim 1, containing, as compound (b), a compound of the formula II in which X is -P=O or -P- and R' is $-(CH_2)_q-$, where q = 2-4, meta- or para-phenylene or meta- or para-phenylenoxy.

8. A mixture according to claim 1, containing, as component (c), a compound of the formula III in which m is the number 2, $R_3$ is a hydrogen atom and R" is $-(CH_2)_p-$, where p = 2-12, m- or p-phenylene, m- or p-xylylene, 1,4-cyclohexylene, 1,4-bis-(methylene)-cyclohexylene, the radical of 4,4'-bicyclohexyl-methane or, in particular, a radical of the formula

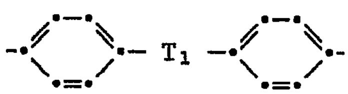

in which $T_1$ is O, $CH_2$ or $SO_2$.

9. A mixture according to claim 1, containing N,N'-4,4'diphenylmethane-bis-maleimide as the compound of the formula III.

10. Use of a curable mixture according to claim 1 for the production of shaped articles, coatings or bonded joints by curing.

11. Shaped articles, coatings or bonded joints obtained from a mixture according to claim 1 by curing.

## Revendications

1. Mélanges thermodurcissables qui comprennent:
a) de 5 à 95% en poids d'un ou de plusieurs dicyanates ou polycyanates aromatiques ou de leurs prépolymères,
b) de 95 à 5% en poids d'un ou de plusieurs composés de formule I ou II ci-dessous

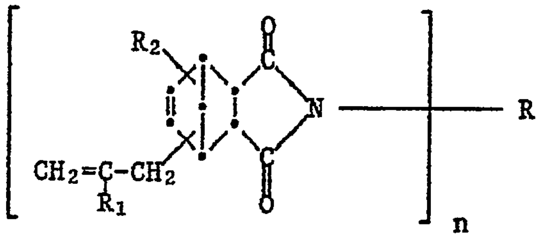

(I)

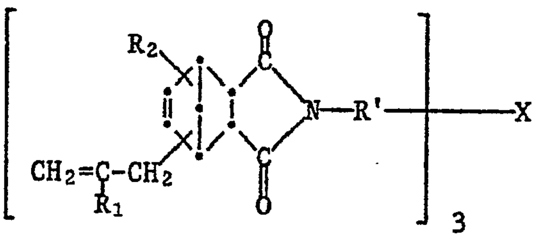

(II)

ou de prépolymères de ces composés et, par rapport à la somme de (a) et (b),
c) de 0 à 50% en poids d'un ou de plusieurs composés de formule III

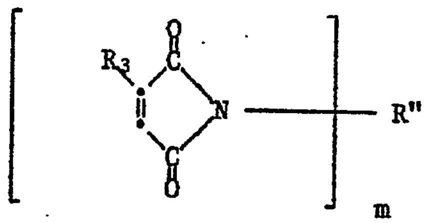

(III),

formules dans lesquelles
$R_1$, $R_2$ et $R_3$ désignent chacun, indépendamment les uns des autres, un atome d'hydrogène ou le groupe méthyle,
n 1 ou 2 et m 2 ou 3,
R, si n = 1, est un atome d'hydrogène, un alkyle en $C_1$–$C_{12}$, un alcényle en $C_3$–$C_6$, un cycloalkyle en $C_5$–$C_8$, un aryle en $C_6$–$C_{10}$ ou un benzyle, ou bien, si n = 2, un groupe $-C_pH_{2p}-$, p étant un nombre de 2 à 20, un arylène en $C_6$–$C_{10}$ ou bien un groupe de formule IV

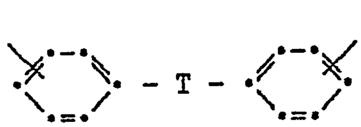

(IV)

T représentant un groupe méthylène ou isopropylidène, ou bien CO, O, S ou $SO_2$,
X représente –P=O ou –P– et R' un groupe $-C_qH_{2q}-$, q étant un nombre de 2 à 20, $-C_rH_{2r}-O-$, r étant un nombre de 2 à 6, ou encore un groupe méta- ou para-phénylène, ou méta- ou paraphénylénoxy dont l'atome d'oxygène est lié à X, et
R″ désigne un radical organique de valence m pouvant avoir de 2 à 30 atome de carbone.

2. Mélanges selon la revendication 1 qui contiennent la composante (a) dans une proportion de 20 à 80% en poids, la composante (b) dans une proportion de 80 à 20% en poids et la composante (c), par rapport à la somme de (a) et (b), dans une proportion de 0 à 30% en poids.

3. Mélanges selon la revendication 1 qui contiennent comme composante (a) un dicyanate ou un mélange d'un dicyanate et de son prépolymère.

4. Mélanges selon la revendication 1 qui contiennent comme composante (b) un composé de formule I dont $R_1$ et $R_2$ sont chacun un atome d'hydrogène et R, si n = 1, est l'hydrogène, un alkyle en $C_1$–$C_8$, ou un groupe allyle, cyclohexyle, phényle ou benzyle, ou bien, si n = 2, R est un groupe $-(CH_2)p-$, p étant un nombre de 2 à 12, ou bien un groupe m- ou p-phénylène ou un groupe de formule IV dans lequel T est le groupe méthylène, O ou $SO_2$.

5. Mélanges selon la revendication 1 qui contiennent comme composante (b) un composé de formule I dans lequel $R_1$ et $R_2$ sont l'hydrogène et R, si n = 1, est le groupe allyle, ou, si n = 2, le groupe $-(CH_2)_6-$ ou

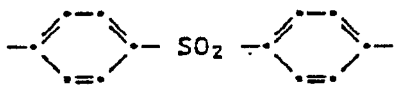

et en particulier le groupe

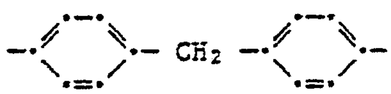

6. Mélanges selon la revendication 1 qui contiennent comme composante (a) le 2,2-bis-(4-cyanatophényl)-propane et comme composante (b) le N-allylimide de l'acide allylbicyclo[2.2.1]hept-5-ène-2,3-dicarboxylique, le bis-[4-allylbicyclo[2.2.1]hept-5-ène-2,3-dicarboxylimidophényl]méthane ou le N,Né-hexaméthylène-bis-(allyl-méthyl-bicyclo[2.2.1]hept-5-ène-2,3-dicarboximide) ou un mélange de plusieurs de ces composés.

7. Mélanges selon la revendication 1 qui contiennent comme composante (b) un composé de formule II dans lequel X est –P=O ou –P– et R′ est un groupe $-(CH_2)_q-$, q étant un nombre de 2 à 4, méta- ou para-phénylène, ou méta- ou para-phénylénoxy.

8. Mélanges selon la revendication 1 qui contiennent comme composante (c) un composé de formule III dans lequel m est le nombre 2, $R_3$ un atome d'hydrogène et R″ un groupe $-(CH_2)_p-$, avec p de 2 à 12, m- ou p-phénylène, m- ou p-xylylène, 1,4-cyclohexylène, 1,4-bis(méthylène)-cyclohexylène, ou le radical du 4,4é-bicyclohexylméthane, mais principalement un radical de formule

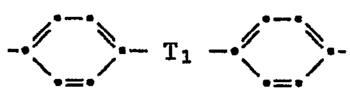

$T_1$ représentant O, $CH_2$ ou $SO_2$.

9. Mélanges selon la revendication 1 qui contiennent comme composé de formule III le N,N′-4,4′-diphénylméthane-bis-maléimide.

10. Emploi des mélanges durcissables de la revendication 1 pour fabriquer des objets moulés, des revêtements ou des collages, par durcissement.

11. Objets moulés, revêtements et collages qui ont été obtenus par durcissement d'un mélange selon la revendication 1.